Europäisches Patentamt

European Patent Office

Office européen des brevets

(11) Numéro de publication: **0 243 272**
**A1**

(12) # DEMANDE DE BREVET EUROPEEN

(21) Numéro de dépôt: **87400927.7**

(22) Date de dépôt: **22.04.87**

(51) Int. Cl.⁴: **G 05 B 19/04**
**H 04 N 3/27**

(30) Priorité: **25.04.86 FR 8606000**

(43) Date de publication de la demande:
**28.10.87 Bulletin 87/44**

(84) Etats contractants désignés: **DE GB IT**

(71) Demandeur: **SOCIETE FRANCAISE D'EQUIPEMENTS POUR LA NAVIGATION AERIENNE (S.F.E.N.A.)**
**B.P. 59 Aérodrome de Villacoublay**
**F-78141 Velizy Villacoublay  (FR)**

(72) Inventeur: **Pitot, Christian**
**39 rue des Chévennes**
**F-75015 Paris  (FR)**

(74) Mandataire: **Chevallier, Robert Marie Georges et al**
**Cabinet BOETTCHER 23, rue La Boétie**
**F-75008 Paris  (FR)**

(54) **Générateur de séquence programmable.**

(57) Intercalé entre une mémoire programmable (M) et des organes d'exécution (O.E.) il comprend, pour générer une séquence de signaux décrite par N boucles de programme imbriquées, N registres d'instructions (R.I.), N analyseurs de syntaxe (A.S.), 2 N - 2 registres pointeurs (R.P.), un analyseur de contexte (A.C.) et un générateur d'adresses (G.A.).

FIGURE UNIQUE

EP 0 243 272 A1

**Description**

GENERATEUR DE SEQUENCE PROGRAMMABLE

L'invention a pour objet, un générateur de séquence programmable capable de générer un ensemble de signaux indépendants, par exécution d'un programme approprié dont les instructions sont rangées dans une mémoire. Le programme proprement dit ne fait pas partie de l'invention, celle-ci, concerne seulement le générateur matériel dont la conception et la consitution sont telles que le générateur peut fonctionner en engendrant des séquencements de signaux susceptibles d'être modifiés facilement par modification du programme exécuté.

Dans ce domaine on utilise jusqu'à présent des microprocesseurs universels avec lesquels une seule instruction est active à la fois. Ces microprocesseurs ont des limites de performances dues à ce que les actions correspondent à des instructions qui sont exécutées l'une après l'autre immédiatement après avoir été lues. On rencontre les limites de ces microprocesseurs :
- quand la densité temporelle des actions est élevée,
- quand la résolution temporelle des actions à produire est grande.

En conséquence, le but principal de l'invention est de parvenir à un générateur de séquence apte à générer des signaux indépendants à partir d'instructions à exécuter, ayant la souplesse de modification permise par un programme, donnant une très bonne précision du positionnement temporel des actions à exécuter par des organes d'exécution.

Pour y parvenir, le dispositif faisant l'objet de l'invention est réalisé selon une architecture matérielle lui permettant d'exécuter N instructions actives simultanément.

Pour la commodité de la rédaction un générateur selon l'invention peut être appelé générateur de séquence d'ordre N. Un tel générateur d'ordre N comprend un contrôleur dans lequel on trouve, en association avec une mémoire :
.N registres d'instructions reliés à la mémoire contenant le programme,
. N analyseurs de syntaxe reliés respectivement aux sorties des N registres d'instructions d'une part et aux organes d'exécution d'autre part,
. 2 N - 2 registres pointeurs reliés aussi aux sorties des N analyseurs de syntaxe,
. un générateur d'adresses relié d'une part aux 2 N - 2 registres pointeurs et aux N analyseurs de syntaxe d'autre part à la mémoire,
. un analyseur de contexte relié d'une part aux sorties des analeyurs de syntaxe, d'autre part à l'entrée des registres d'instruction.

Dans le cas particulier d'un générateur de séquence d'ordre 2, ce dernier comprend donc 2 registres d'instruction, 2 analyseurs de syntaxe et 2 registres pointeurs. Un tel générateur est utilisé dans un contrôleur d'écran programmable exécutant concouramment deux instructions appartenant à deux types différents :
- instructions de type "ligne",
- instructions de type "trame",

de manière à générer les signaux permettant le contrôle de la visualisation d'une image numérique sur un écran cathodique à balayage de type Télévision, selon un standard quelconque de balayage.

Chaque registre d'instruction contient l'instruction active de type correspondant, en cours d'exécution.

Bien entendu, la structure matérielle du générateur de séquence de l'invention ne fonctionne correctement qu'en liaison avec un programme établbli convenablement. Bien que ce programme ne fasse pas partie de l'invention ainsi qu'on l'a dit, il est utile d'en définir ici quelques particularités afin que la structure du générateur de séquence soit mieux comprise.

Dans la mémoire contenant le programme, les instructions sont rangées dans un ordre précis.

Leur acquisition se fait en suivant l'ordre de leur rangement sauf lors de "branchements" qui constituent une rupture dans la séquence des adresses de lecture. Par contre, le transfert dans les registres d'instruction, de toutes les instructions nouvelles, se fait simultanément à partir de codes préalablement préchargés.

Il existe une hiérarchie stricte des types d'instructions de telle manière que pour deux instructions appartenant à deux types différents, l'une est dite de niveau supérieur l'autre de niveau inférieur. L'ordonnancement des types d'instruction traduit l'imbrication des boucles du programme décrit par ces instructions.

De plus, le code de chaque instruction se décompose en deux parties : la partie temporelle, et la partie opérative.

La partie temporelle d'une instruction de niveau supérieur est codée en nombre d'instructions du niveau immédiatement inférieur ayant une particularité définie dite critère de comptage. La partie temporelle d'une instruction du niveau le plus bas est codée en nombre d'événements suivant un signal d'entrée (généralement en nombre de périodes d'une horloge).

En conséquence, la durée d'activité d'une instruction de niveau supérieur est égale à la somme des durées d'un nombre entier d'instructions de niveau inférieur. Ainsi, le début ou la fin de la durée d'une instruction de niveau supérieur est aussi le début ou la fin respectivement d'une instruction de niveau inférieur. Chaque instruction de niveau supérieur fait appel à une suite d'instructions du niveau inférieur et cette suite peut, éventuellement être bouclée sur elle-même.

- la partie opérative qui concerne les organes d'exécution et qui peut être un événement, une validation, une information relative à un appel de boucle. A partir de la mémoire qui contient le programme comme dit précédemment, les instructions sont préchargées avant d'être transférées dans les registres d'instructions. Le choix du registre dans lequel une instruciton doit être chargée ne figure pas dans le code des instructions. C'est la surveillance des états internes du circuit et de leur évolution au fil de l'exécution des instructions précédentes qui permet l'affectation des instructions lues à un type donné et donc son transfert dans le registre d'instructions (R.I. correspondant). Ce rôle est celui de l'analyseur de contexte.

Le transfert des instructions dans les registres d'instructions ayant eu lieu, les instructions actives simultanément sont de types différents et doivent être analysées afin que les informations nécessaires soient envoyées aux organes d'exécution. Ce rôle est celui des analyseurs de syntaxe qui sont associés en propre à chaque registre d'instruction.

Chaque analyseur de syntaxe extrait du code de l'instruction l'information destinée aux organes d'exécution et formatte cette instruction pour rendre effectives les commandes de ces organes. Il extrait aussi du code de l'instruction l'information destinée au générateur d'adresse. Ce dernier a pour rôle de choisir l'adresse de l'instruction suivante dans la mémoire qui contient le programme. Les registres pointeurs sont chargés à partir de l'adresse courante incrémentée c'est-à-dire de l'adresse qui suit immédiatement celle de l'instruction qui provoque le chargement.

Le schéma unique annexé est une représentation générale simplifiée d'un générateur de séquence d'ordre N conforme à l'invention. On reconnait sur ce schéma, en liaison avec une mémoire M programmable à volonté, un ensemble de N registres d'instructions R.I. reliés individuellement à la mémoire M pour en recevoir des données, et reliés chacun par leur sortie à N analyseurs de syntaxe A.S.. Ces derniers sont réunis à des organes d'exécution O.E., au nombre de six mais dont le nombre exact n'est pas limité.

Les sorties des analyseurs de syntaxe A.S. sont réunies d'une part aux entrées de 2N - 2 registres pointeurs R.P., d'autre part à l'entrée d'un analyseur de contexte A.C. et à une entrée d'un générateur d'adresse G.A.. Ce dernier est interposé entre les 2N - 2 registres pointeurs R.P. et la mémoire M. L'analyseur de contexte A.C. est relié aussi aux registres d'instructions R.I.

Le fonctionnement, en association avec un programme convenable, est conforme aux explications données plus haut.

Le générateur de l'invention permet en particulier la commande du balayage d'un écran de télévision à double trame entrelacée, à un nombre de lignes quelconques, à une norme de balayage quelconque, par exemple 25 images/seconde en 50 demi-trames par seconde ou à 50 images/seconde en 100 demi-trames par seconde, etc..., à partir d'un programme enregistré dans une mémoire PROM.

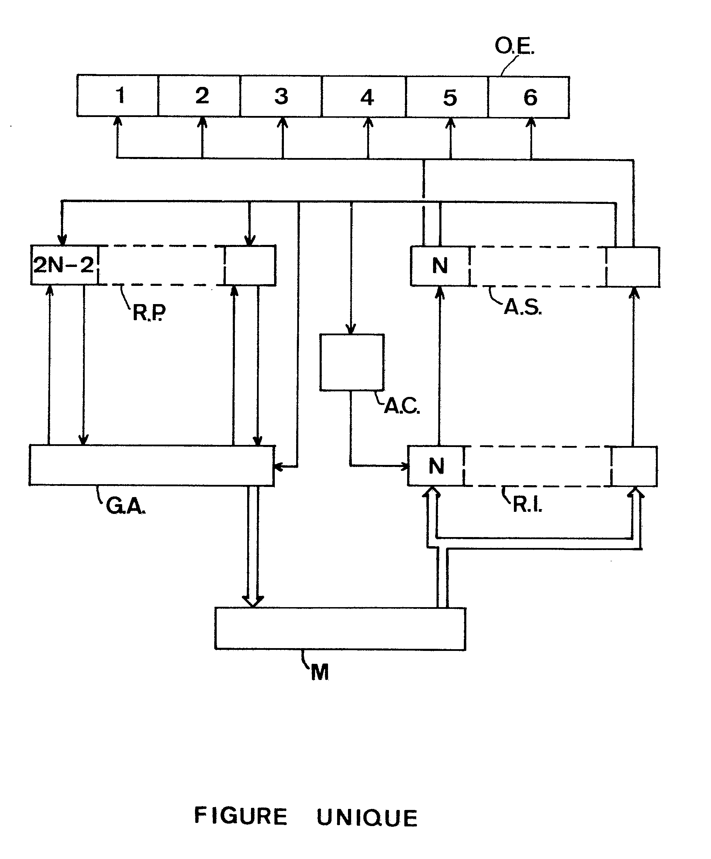

**Revendications**

1) Générateur de séquence d'ordre N permettant d'exécuter un programme modifiable inclus dans une mémoire M appropriée, programme dont la structure nécessite la prise en compte simultanée de N instructions de types différents pour commander une pluralité d'organes d'exécution, caractérisé en ce qu'il comprend :
- N registres d'instruction R.I. reliés à la mémoire M pour en recevoir des données sous forme d'instructions à exécuter ayant chacune une partie temporelle et une partie opérative, chacun des N registres d'instruction étant associé à un type d'instruction et les types étant ordonnés en une hiérarchie stricte traduisant l'imbrication des boucles du programme décrit par ces instructions,
- N analyseurs de syntaxe (A.S.) reliés respectivement aux sorties des N registres d'instructions (R.I.) d'une part et aux organes d'exécution (O.E.) d'autre part,
- 2 N - 2 registres pointeurs (R.P.) reliés aux sorties des N analyseurs de syntaxe (A.S.),
- un générateur d'adresse (G.A.) relié d'une part aux sorties des N analyseurs de syntaxe (A.S.) et aux 2 N - 2 registres pointeurs (R.P.), d'autre part à la mémoire (M),
- un analyseur de contexte (A.C.) relié d'une part aux sorties des N analyseurs de syntaxe (A.S.), d'autre part aux N registres d'instructions (R.I.).

2) Générateur selon la revendication 1 utilisé dans un contrôleur d'écran pour générer simultanément et avec une résolution temporelle suffisante, l'ensemble des signaux nécessaires au contrôle d'un écran à balayage télévision, caractérisé en ce qu'il comprend 2 registres d'instructions, 2 analyseurs de syntaxe, 2 registres pointeurs en combinaison avec un générateur d'adresses et un analyseur de contexte.

FIGURE UNIQUE

0243272

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EDN, vol. 25, no. 21, 20 novembre 1980, pages 99-100, Boston, MA, US; G. COLE: "Time simultaneous events with a uP" | | G 05 B  19/04 H 04 N  3/27 |
| | --- | | |
| A | PATENT ABSTRACTS OF JAPAN, vol. 8, no. 169 (P-292)[1606], 4 août 1984; & JP-A-59 65 307 (CANON K.K.) 13-04-1984 | | |
| | ----- | | |

DOMAINES TECHNIQUES RECHERCHES (Int. Cl.4)

G 05 B
G 06 F
H 04 N

Le présent rapport de recherche a été établi pour toutes les revendications

| Lieu de la recherche | Date d'achèvement de la recherche | Examinateur |
|---|---|---|
| LA HAYE | 27-07-1987 | BEINDORFF W.H. |